# EUROPÄISCHE PATENTSCHRIFT

(11) **EP 3 397 861 B1**
(45) Veröffentlichungstag und Bekanntmachung des Hinweises auf die Patenterteilung: **13.11.2019**
(21) Anmeldenummer: 16808980.3
(22) Anmeldetag: 05.12.2016
(51) Int. Cl.: F03D 80/40, F03D 17/00

(54) **VERFAHREN ZUM PROGNOSTIZIEREN DER ANLAGERUNG VON EIS AN EINEM ROTORBLATT EINER WINDKRAFTANLAGE UND DESSEN VERWENDUNG**
METHOD FOR PREDICTING THE ACCUMULATION OF ICE ON A ROTOR BLADE OF A WIND TURBINE AND THE USE THEREOF
PROCÉDÉ PERMETTANT DE PRONOSTIQUER UNE ACCUMULATION DE GIVRE SUR UNE PALE DE ROTOR D'UNE ÉOLIENNE ET UTILISATION DUDIT PROCÉDÉ

(30) Priorität: 29.12.2015 DE 102015122932
(43) Veröffentlichungstag der Anmeldung: 07.11.2018
(73) Patentinhaber: FOS4X GmbH, 81371 München (DE)
(72) Erfinder: MÜLLER, Mathias, 82194 Gröbenzell (DE); SCHAUSS, Thomas, 82205 Gliching (DE); RIEGER, Florian, 80331 München (DE); SCHUBERT, Matthias, 20149 Hamburg (DE)
(74) Vertreter: Zimmermann & Partner Patentanwälte mbB
(86) Internationale Anmeldenummer: PCT/EP2016/079760
(87) Internationale Veröffentlichungsnummer: WO 2017/114639

(56) Entgegenhaltungen:
- EP-A1- 2 511 524
- DE-A1-102005 016 524

## Beschreibung

### TECHNISCHES GEBIET

Ausführungsformen der vorliegenden Offenbarung betreffen ein Verfahren zum Prognostizieren der Anlagerung von Eis an einem Rotorblatt einer Windkraftanlage sowie die Verwendung eines Verfahrens zum Prognostizieren der Anlagerung von Eis an einem Rotorblatt einer Windkraftanlage.

Rotorblätter von Windkraftanlagen sind den Witterungsbedingungen der Umgebung ungeschützt ausgesetzt. An bestimmten Standorten kann bei entsprechend niedrigen Umgebungstemperaturen und ausreichend hoher Luftfeuchte bzw. bei auftretendem Niederschlag Eis an den Rotorblättern angelagert werden. Mit zunehmender Größe der Rotorblätter von Windkraftanlagen nimmt deren Oberfläche zu, so dass auch die Gefahr zur Anlagerung von Eis, d. h. der Ausbildung eines Eisansatzes an den Rotorblättern, zunimmt.

Eisanlagerungen stellen einerseits eine potentielle Gefahr für die Umgebung der Windkraftanlage dar, da bei einem Abwurf des Eisansatzes - im Betrieb oder im Stillstand der Anlage - die abgeworfenen Eisstücke Personen und Gegenstände im Abwurfradius gefährden können. Andererseits kann sich insbesondere bei ungleichmäßiger Anlagerung von Eis auch eine Unwucht des Rotors der Windkraftanlage ergeben, was im Betrieb der Windkraftanlage zu Schäden führen kann.

### STAND DER TECHNIK

Es ist bekannt, Daten einer Windkraftanlage auszuwerten, um auf die Gefahr einer bereits stattgefundenen Anlagerung von Eis zu schließen. EP 2511524 A1 und US 2012/0226485 A1 offenbaren Verfahren zum Prognostizieren der Anlagerung von Eis an einem Rotorblatt. Die DE 10 2005 016 524 A1 offenbart ein Verfahren zum Erkennen von Eis an einer Windturbine, bei welchem sowohl meteorologische Bedingungen überwacht werde, die im Zusammenhang mit Vereisungszuständen stehen, und auch eine oder mehrere physikalische, charakteristische Größen der Windkraftanlage im Betrieb überwacht werden, die auf eine Massenveränderung der Rotorblätter der Windkraftanlage schließen lassen.

Die bekannten Verfahren weisen z. B. den Nachteil auf, dass nur ein bereits vorhandener Eisansatz erkannt werden kann, welcher bereits eine Betriebsgefahr darstellt. Oftmals ist es jedoch wünschenswert, für die Zukunft zu prognostizieren, ob und ggf. wann eine nennenswerte Anlagerung von Eis stattfinden wird, welche beispielsweise eine Betriebsgefahr darstellen könnte. Ebenfalls ist es oft wünschenswert, für die Zukunft zu prognostizieren, ob und ggf. wann ein Eisansatz, der beispielsweise eine Betriebsgefahr darstellen könnte, nicht mehr vorhanden sein wird.

Es soll daher eine Lösung angegeben werden, welche eine zuverlässige Prognose der Anlagerung von Eis an einem Rotorblatt einer Windkraftanlage erlaubt.

### ZUSAMMENFASSUNG

Ausführungsformen der vorliegenden Offenbarung stellen ein Verfahren zum Prognostizieren der Anlagerung von Eis an einem Rotorblatt einer Windkraftanlage gemäß Anspruch 1 bereit. Ferner geben Ausführungsformen der vorliegenden Offenbarung eine Verwendung eines hierin beschriebenen Verfahrens zum Ermitteln der für einen Abtauvorgang benötigten Betriebsparameter einer Rotorblatt-Abtaueinrichtung gemäß Anspruch 12 an.

Gemäß einer Ausführungsform wird ein Verfahren zum Prognostizieren der Anlagerung von Eis an einem Rotorblatt einer Windkraftanlage angegeben, wie in Anspruch 1 definiert.

Gemäß einer weiteren Ausführungsform wird eine Verwendung eines Verfahrens zum Prognostizieren der Anlagerung von Eis an einem Rotorblatt einer Windkraftanlage für ein Ermitteln der für einen Abtauvorgang benötigten Betriebsparameter einer Rotorblatt-Abtaueinrichtung angegeben, wie in Anspruch 12 definiert.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
- Fig. 1: ein Diagramm einer Systemgröße im Zeitverlauf zum Erläutern eines Verfahrens zum Prognostizieren der Anlagerung von Eis an einem Rotorblatt einer Windkraftanlage gemäß einer Ausführungsform;
- Fig. 2: ein weiteres Diagramm einer Systemgröße im Zeitverlauf zum Erläutern eines Verfahrens zum Prognostizieren der Anlagerung von Eis an einem Rotorblatt einer Windkraftanlage gemäß einer weiteren Ausführungsform;
- Fig. 3: eine schematische Darstellung einer Windkraftanlage, bei welcher das Verfahren gemäß einer der hierin beschriebenen Ausführungsformen zum Einsatz kommen kann; und
- Fig. 4: ein Ablaufdiagramm eines Verfahrens zum Prognostizieren der Anlagerung von Eis an einem Rotorblatt einer Windkraftanlage gemäß einer Ausführungsform.

### BESCHREIBUNG DER AUSFÜHRUNGSFORMEN

Nachstehend werden Ausführungsformen dieser Offenbarung näher erläutert. Die Zeichnungen dienen der Veranschaulichung eines oder mehrerer Beispiele von Ausführungsformen. In den Zeichnungen bezeichnen gleiche Bezugszeichen die gleichen oder ähnliche Merkmale der jeweiligen Ausführungsformen.

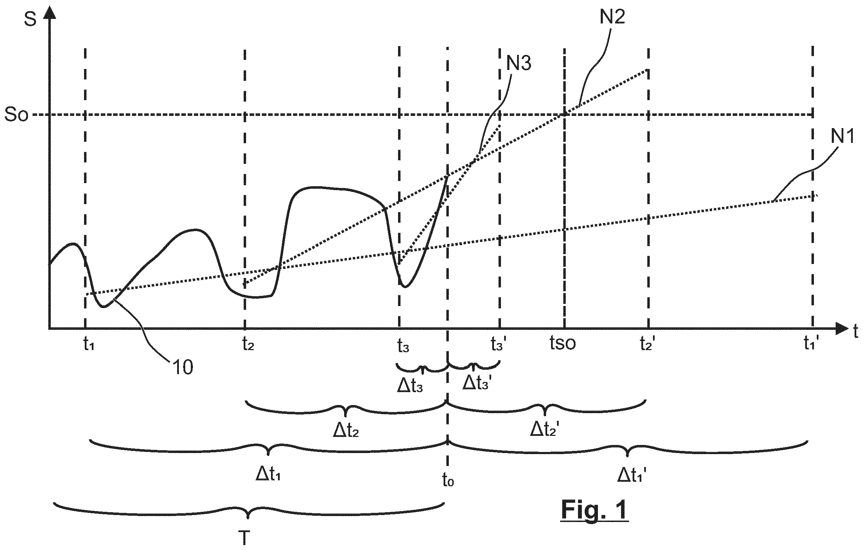

In Fig. 1 ist ein Diagramm einer Systemgröße S zum Erläutern eines Verfahrens zum Prognostizieren der Anlagerung von Eis an einem Rotorblatt einer Windkraftanlage gemäß einer Ausführungsform dargestellt.

Eine Anlagerung von Eis, wie hierin verwendet, bezeichnet eine Zunahme oder eine Abnahme eines Eisansatzes im Zeitverlauf.

Bei dem Kurvenverlauf von Fig. 1 ist potentiell mit einer Zunahme des Eisansatzes im Zeitverlauf zu rechnen.

Das Diagramm zeigt verschiedene Kurven im Zeitverlauf t, die mit der Systemgröße S zusammenhängen. Die mit 10 bezeichnete Kurve wird durch Messung einer geeigneten Messgröße erhalten und zeigt - im Rahmen der Messgenauigkeit und ggf. der Genauigkeit einer notwendigen Umrechnung von der Messgröße in die Systemgröße - einen wahren Verlauf der Systemgröße S während eines Erfassungszeitraums T.

Dieser Erfassungszeitraum T ist mindestens gleich lang wie der längste für die Prognose herangezogene Teilzeitraum, was später noch erläutert wird. Der Erfassungszeitraum kann aber auch länger sein als jeder der für die Prognose herangezogene Teilzeiträume; beispielsweise werden die zugrundegelegten Messdaten fortlaufend oder in geeigneten Abtastintervallen an der Windkraftanlage ständig während eines Zeitraums von mehreren Tagen oder dergleichen erfasst, und der Erfassungszeitraum T entspricht einem solchen Zeitraum. Die Teilzeiträume überschneiden sich typischerweise, bzw. ein Teilzeitraum ist vollständig in einem anderen Teilzeitraum enthalten, und sie sind jeweils nur in der Länge unterschiedlich. In Fig. 1 ist der Teilzeitraum Δt₃ vollständig in den Teilzeiträumen Δt₂ und Δt₁ enthalten; der Teilzeitraum Δt₂ ist vollständig im Teilzeitraum Δt₂ enthalten. Entsprechendes gilt für die Vorhersagezeiträume Δt₁', Δt₂', Δt₃'.

In dem Diagramm in Fig. 1 bezeichnet t₀ den aktuellen Zeitpunkt, d. h. alle Zeitpunkte rechts von t₀ sind zum Zwecke der durchzuführenden Prognose in der Zukunft liegende Zeitpunkte. Der Erfassungszeitraum T, während dessen der auf realen Messdaten beruhende wahre Verlauf 10 der Systemgröße S dargestellt ist, endet demnach mit dem aktuellen Zeitpunkt t₀. Die Offenbarung ist jedoch nicht darauf beschränkt, dass der Erfassungszeitraum T stets mit dem aktuellen Zeitpunkt t₀ endet, und es ist denkbar, dass eine Prognose für die Anlagerung von Eis an einem Rotorblatt der Windkraftanlage zu einem aktuellen Zeitpunkt t₀ mit einem solchen wahren Verlauf 10 der Systemgröße S durchgeführt wird, dessen Erfassungszeitraum vor dem aktuellen Zeitpunkt t₀ endet, solange der wahre Verlauf 10 der Systemgröße S für eine Prognose noch ausreichend aktuell ist.

Die Systemgröße S hängt mit der Masse des Rotorblattes zusammen. Alternativ oder zusätzlich hängt die Systemgröße S mit der Masse eines Eisansatzes an dem Rotorblatt zusammen. Typischerweise wird die Systemgröße S aus Messdaten von Vibrationsmessungen in oder an einem Rotorblatt oder mehreren der Rotorblätter erhalten. Bei Ausführungsformen wird die Messgröße, im Zeitverlauf des Erfassungszeitraums gemessen, vorzugsweise durch Messen von Vibrationen im Zeitverlauf des Erfassungszeitraums, und zwar an oder in dem Rotorblatt. Die Systemgröße wird aus den Messdaten hergeleitet, vorzugsweise durch Eigenfrequenzanalyse aus den Messdaten der Vibrationsmessungen. Die Systemgröße S lässt also direkt auf die Masse des jeweiligen Rotorblatts bzw. der jeweiligen Rotorblätter und/oder auf die Eisansatz-Masse des jeweiligen Rotorblatts bzw. der jeweiligen Rotorblätter schließen. Bei Ausführungsformen ist die Systemgröße proportional zur Gesamtmasse des Rotorblatts und/oder proportional zu einem zusätzlichen Massenbelag des Rotorblatts. Ein zusätzlicher Massenbelag des Rotorblatts ist ein solcher Massebelag, der zu der Eigenmasse des Rotorblatts hinzukommt. Typischerweise ist die Systemgröße proportional zur Eismasse.

Wenn eine dahingehende Prognose durch das Verfahren erwünscht ist, bei welcher vorhergesagt wird, ob oder ob nicht der Eisansatz an einem Rotorblatt der Windkraftanlage (das ggf. angelagerte Eis an dem Rotorblatt) eine den Betrieb der Windkraftanlage beeinträchtigende Menge annehmen wird, kann ein oberer Schwellenwert So für die Systemgröße S geeignet festgelegt werden, wie in dem Diagramm von Fig. 1 gezeigt.

Ein solcher oberer Schwellenwert So kann beispielsweise empirisch ermittelt werden, oder er kann durch Bestimmungen hinsichtlich der Betriebssicherheit der Windkraftanlage vorgegeben sein. Der obere Schwellenwert So ist beispielsweise ein definierter oberer Grenzwert für die Menge von angelagertem Eis, z. B. die Masse und/oder das Volumen von angelagertem Eis, bei dessen Überschreiten ein sicherer Betrieb der Windkraftanlage nicht mehr zulässig oder nicht mehr möglich ist.

Gemäß der beschriebenen Ausführungsform wird eine Ausgleichsrechnung des Kurvenverlaufs für einen Vorhersagezeitraum aus den Systemgrößendaten durchgeführt, die während eines Teilzeitraums des Erfassungszeitraums T erfasst wurden, und mindestens eine weitere Ausgleichsrechnung des Kurvenverlaufs für einen weiteren Vorhersagezeitraum aus den Systemgrößendaten durchgeführt, die während eines weiteren Teilzeitraums des Erfassungszeitraums T erfasst wurden.

In dem in Fig. 1 dargestellten Diagramm wird eine Ausgleichsrechnung des Kurvenverlaufs für einen Vorhersagezeitraum Δt₁' aus den Systemgrößendaten durchgeführt, die während eines Teilzeitraums Δt₁ des Erfassungszeitraums T erfasst wurden, so dass eine Vorhersagekurve N1 erhalten wird. Außerdem wird eine Ausgleichsrechnung des Kurvenverlaufs für einen Vorhersagezeitraum Δt₂' aus den Systemgrößendaten durchgeführt, die während eines Teilzeitraums Δt₂ des Erfassungszeitraums T erfasst wurden, so dass eine Vorhersagekurve N2 erhalten wird. Schließlich wird eine Ausgleichsrechnung des Kurvenverlaufs für einen Vorhersagezeitraum Δt₃' aus den Systemgrößendaten durchgeführt, die während eines Teilzeitraums Δt₃ des Erfassungszeitraums T erfasst wurden, so dass eine Vorhersagekurve N3 erhalten wird.

Für die beschriebene Ausführungsform gilt Folgendes: Als Vorhersagezeitraum Δt₁' wird der Zeitraum vom aktuellen Zeitpunkt t₀ bis zu einem Zeitpunkt t₁' in der Zukunft bezeichnet. Entsprechend wird als Vorhersagezeitraum Δt₂' der Zeitraum vom aktuellen Zeitpunkt t₀ bis zu einem Zeitpunkt t₂' in der Zukunft bezeichnet, und als Vorhersagezeitraum Δt₃' wird der Zeitraum vom aktuellen Zeitpunkt t₀ bis zu einem Zeitpunkt t₃' in der Zukunft bezeichnet.

Als Teilzeitraum Δt₁ wird der Zeitraum von einem in der Vergangenheit liegenden Zeitpunkt t₁ bis zum aktuellen Zeitpunkt t₀ bezeichnet. Entsprechend wird als Teilzeitraum Δt₂ der Zeitraum von einem in der Vergangenheit liegenden Zeitpunkt t₂ bis zum aktuellen Zeitpunkt t₀ bezeichnet, und als Teilzeitraum Δt₃ wird der Zeitraum von einem in der Vergangenheit liegenden Zeitpunkt t₃ bis zum aktuellen Zeitpunkt t₀ bezeichnet

Die Ausgleichsrechnung kann eine geeignete Möglichkeit sein, um aus dem in dem jeweiligen Teilzeitraum Δt₁, Δt₂, Δt₃ wahren Verlauf 10 der Systemgröße S auf mathematischem Wege einen wahrscheinlichen Kurvenverlauf für die Zukunft zu bestimmen. Beispiele für eine Ausgleichsrechnung sind Regressionsverfahren. Bei Ausführungsformen ist mindestens eine der Ausgleichsrechnungen eine lineare oder eine quadratische Regression. Vorzugsweise sind alle der Ausgleichsrechnungen jeweils eine lineare oder eine quadratische Regression. In der in Fig. 1 dargestellten Ausführungsform werden alle Vorhersagekurven N1, N2, N3 jeweils aus einer linearen Regression erhalten.

Bei Ausführungsformen wird jede der Ausgleichsrechnungen jeweils für einen Vorhersagezeitraum in der Zukunft durchgeführt, welcher maximal so lang ist wie der für die jeweilige Ausgleichsrechnung herangezogene Teilzeitraum von erfassten Systemgrößendaten. Vorzugsweise ist der jeweilige Vorhersagezeitraum ungefähr gleich lang wie der für die jeweilige Ausgleichsrechnung herangezogene Teilzeitraum von erfassten Systemgrößendaten.

In der in Fig. 1 dargestellten Ausführungsform ist der Vorhersagezeitraum Δt₁' für die Vorhersagekurve N1 ungefähr gleich lang wie der zum Erhalten der Vorhersagekurve N1 herangezogene Teilzeitraum Δt₁ von erfassten Systemgrößendaten des wahren Verlaufs 10 der Systemgröße S. Entsprechend ist der Vorhersagezeitraum Δt₂' für die Vorhersagekurve N2 ungefähr gleich lang wie der zum Erhalten der Vorhersagekurve N2 herangezogene Teilzeitraum Δt₂ von erfassten Systemgrößendaten des wahren Verlaufs 10 der Systemgröße S, und der Vorhersagezeitraum Δt₃' für die Vorhersagekurve N3 ist ungefähr gleich lang wie der zum Erhalten der Vorhersagekurve N3 herangezogene Teilzeitraum Δt₃ von erfassten Systemgrößendaten des wahren Verlaufs 10 der Systemgröße S.

Gemäß dem Verfahren der Ausführungsform wird festgestellt, ob oder ob nicht der obere Schwellenwert So von einer oder mehreren Vorhersagekurven N1, N2, N3 in der Zukunft überschritten wird und/oder ob ein unterer Schwellenwert Su von einer oder mehreren Vorhersagekurven N1, N2, N3 in der Zukunft unterschritten wird. Gemäß dem Verfahren der Ausführungsform wird das Ergebnis der Feststellung ausgegeben, beispielsweise an eine geeignete Auswertungseinrichung.

In der dargestellten Ausführungsform gemäß Fig. 1 wird der Schwellenwert So von der Kurve N1 in dem für sie vorgesehenen Vorhersagezeitraum Δt₁' (d. h. bis zum Zeitpunkt t₁') nicht überschritten. Auch wird der Schwellenwert So von der Kurve N3 in dem für sie vorgesehenen Vorhersagezeitraum Δt₃' (d. h. bis zum Zeitpunkt t₃') nicht überschritten.

Die Kurve N2 überschreitet den Schwellenwert So jedoch indem für sie maßgeblichen Vorhersagezeitraum Δt₂' (d. h. bis zum Zeitpunkt t₂'). Es wird also das Ergebnis ausgegeben, dass eine der Kurven den festgelegten oberen Schwellenwert So überschreiten wird. Dies kann analog zu der Feststellung sein, dass in Zukunft Eis angelagert wird.

Selbstverständlich kann dann, wenn festgestellt wird, dass bereits zum aktuellen Zeitpunkt t₀ der obere Schwellenwert von dem wahren Verlauf 10 der Systemgröße S überschritten ist, ebenso das Ergebnis ausgegeben werden, dass der obere Schwellenwert S0 bereits überschritten ist, bzw. es kann eine entsprechende Eiswarnmeldung ausgegeben werden.

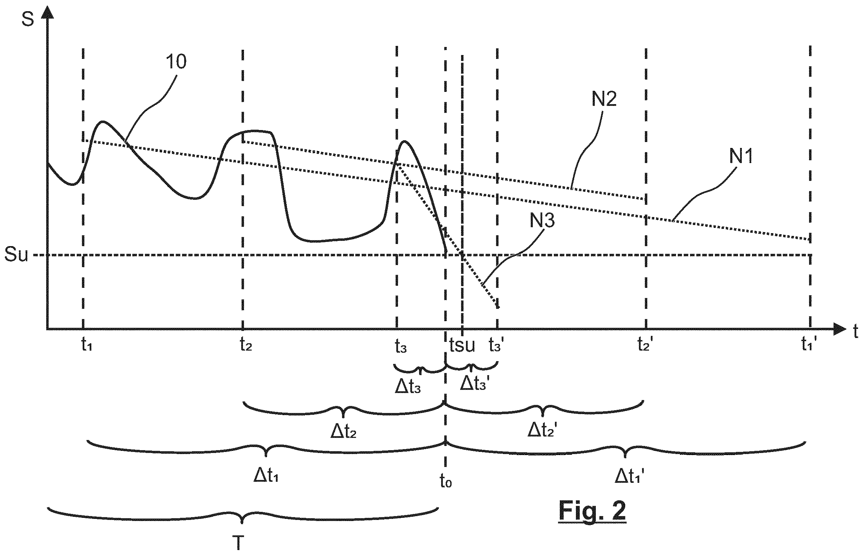

In Fig. 2 ist ein Diagramm einer Systemgröße S zum Erläutern eines Verfahrens zum Prognostizieren der Anlagerung von Eis an einem Rotorblatt einer Windkraftanlage gemäß einer weiteren Ausführungsform dargestellt. Die Darstellung in Fig. 2 ist analog zu derjenigen in Fig. 1, und wiederholte Beschreibungen werden hier weggelassen.

Bei dem Kurvenverlauf von Fig. 2 ist jedoch im Unterschied zu demjenigen aus Fig. 1 potentiell mit einer Abnahme des Eisansatzes im Zeitverlauf zu rechnen. Es ist ein unterer Schwellenwert Su für die Systemgröße S festgelegt, der einen Minimalwert für einen Eisansatz angibt, und unterhalb dessen ein Betrieb der Windkraftanlage wahrscheinlich möglich ist. Eine Kombination des prinzipiellen Vorgehens aus Fig. 1 mit dem hier für die Fig. 2 beschriebenen ist möglich, d. h. es ist möglich, einen oberen Schwellenwert So und auch einen unteren Schwellenwert Su festzulegen, die nicht zwingend zusammenfallen müssen.

Das Vorgehen der Ausgleichsrechnungen ist vergleichbar mit demjenigen der Fig. 1. Entsprechend wird gemäß der Ausführungsform aus Fig. 2 der Schwellenwert So von der Kurve N1 in dem für sie vorgesehenen Vorhersagezeitraum Δt₁' (d. h. bis zum Zeitpunkt t₁') nicht unterschritten, der Schwellenwert So wird von der Kurve N2 in dem für sie vorgesehenen Vorhersagezeitraum Δt₂' (d. h. bis zum Zeitpunkt t₂') nicht unterschritten, aber der Schwellenwert So wird von der Kurve N3 in dem für sie vorgesehenen Vorhersagezeitraum Δt₃' (d. h. bis zum Zeitpunkt t₃') unterschritten. Es wird also das Ergebnis ausgegeben, dass eine der Kurven den festgelegten unteren Schwellenwert Su unterschreiten wird. Dies kann analog zu der Feststellung sein, dass in Zukunft ausreichend Eis abtauen wird.

Bei Ausführungsformen ist vorgesehen, dass dann, wenn festgestellt wird, dass der obere Schwellenwert So von einer oder mehreren der Vorhersagekurven N1, N2, N3 in der Zukunft überschritten wird, eine Eiswarnmeldung ausgegeben wird. Bei dem in Fig. 1 dargestellten Diagramm kann eine solche Eiswarnmeldung ausgegeben werden, da die Kurve N2 den oberen Schwellenwert So überschreitet.

Alternativ oder zusätzlich ist bei Ausführungsformen vorgesehen, dass dann, wenn festgestellt wird, dass der untere Schwellenwert Su von einer oder mehreren der Vorhersagekurven N1, N2, N3 in der Zukunft unterschritten wird, eine Eisfreimeldung ausgegeben wird. Bei dem in Fig. 2 dargestellten Diagramm kann eine solche Eisfreimeldung ausgegeben werden, da die Kurve N3 den unteren Schwellenwert Su unterschreitet.

In diesem Zusammenhang ist es möglich, dass die Eiswarnmeldung bzw. die Eisfreimeldung eine verzögerte Reaktion vorsehen, beispielsweise ein Abschalten der Windkraftanlage erst mit einer gewissen Verzögerung auf die Eiswarnmeldung hin bzw. ein Einschalten der Windkraftanlage erst mit einer gewissen Verzögerung auf die Eisfreimeldung hin.

Gemäß einer Ausführungsform ist vorgesehen, dass ein voraussichtlicher Überschreitungszeitpunkt tso, zu welchem eine Mindestmenge an Eis an dem Rotorblatt überschritten wird, ermittelt und/oder ausgegeben wird. Alternativ oder zusätzlich ist gemäß einer Ausführungsform vorgesehen, dass ein voraussichtlicher Unterschreitungszeitpunkt tsu, zu welchem eine Maximalmenge an Eis an dem Rotorblatt unterschritten wird, ermittelt und/oder ausgegeben wird.

Der Überschreitungszeitpunkt tso ist in Fig. 1 beispielhaft als zwischen dem Zeitpunkt t₃' und dem Zeitpunkt t₂' liegend gezeigt. Entsprechend ist der Unterschreitungszeitpunkt tsu in Fig. 2 beispielhaft als zwischen dem Zeitpunkt t₀ und dem Zeitpunkt t₃' liegend gezeigt.

Das Herleiten eines Überschreitungszeitpunkts tso und/oder eines Unterschreitungszeitpunkt tsu kann dazu beitragen, Maßnahmen, die mit einer Eiswarnmeldung und/oder einer Eisfreimeldung einhergehen, besser abzustimmen.

Gemäß einer Ausführungsform ist vorgesehen, dass eine Wahrscheinlichkeit dafür hergeleitet wird, ob oder ob nicht eine Mindestmenge an Eis an dem Rotorblatt angelagert wird, und zwar aus dem jeweiligen Vorhersagezeitraum Δt₁', Δt₂', Δt₃' und/oder aus dem jeweiligen Überschreitungszeitpunkt tso und/oder aus dem jeweiligen Kurvenverlauf der jeweiligen Vorhersagekurve N1, N2, N3. Alternativ oder zusätzlich ist gemäß einer Ausführungsform vorgesehen, dass eine Wahrscheinlichkeit dafür hergeleitet wird, ob oder ob nicht eine Maximalmenge an angelagertem Eis an dem Rotorblatt unterschritten wird, und zwar aus dem jeweiligen Vorhersagezeitraum Δt₁', Δt₂', Δt₃' und/oder aus dem jeweiligen Überschreitungszeitpunkt tso und/oder aus dem jeweiligen Kurvenverlauf der jeweiligen Vorhersagekurve N1, N2, N3.

Das Herleiten einer Wahrscheinlichkeit kann dazu beitragen, Maßnahmen, die mit einer Eiswarnmeldung und/oder einer Eisfreimeldung einhergehen, besser abzustimmen.

Gemäß einer Ausführungsform ist vorgesehen, dass eine Menge an Eis, das voraussichtlich an dem Rotorblatt angelagert wird, aus dem jeweiligen Vorhersagezeitraum Δt1', Δt2', Δt3' und/oder aus dem jeweiligen Überschreitungszeitpunkt tso und/oder aus dem jeweiligen Kurvenverlauf der jeweiligen Vorhersagekurve N1, N2, N3 hergeleitet wird.

Das Herleiten der Menge an Eis kann dazu beitragen, Maßnahmen, die mit einer Eiswarnmeldung und/oder einer Eisfreimeldung einhergehen, besser abzustimmen.

Gemäß einer Ausführungsform hat mindestens einer der Teilzeiträume Δt₁, Δt₂, Δt₃ eine Länge von ungefähr einer Stunde oder mehr. Vorzugsweise werden mindestens drei Ausgleichsrechnungen durchgeführt, und deren jeweilige Teilzeiträume haben eine Länge von ca. 1 Stunde, ca. 2 Stunden bzw. ca. 4 Stunden.

Gemäß einer Ausführungsform sind die Längen der jeweiligen Teilzeiträume Δt₁, Δt₂, Δt₃ vorab festgelegt. Die Längen der jeweiligen Teilzeiträume Δt₁, Δt₂, Δt₃ sind vorzugsweise abhängig vom Standort der Windkraftanlage und/oder abhängig von meteorologischen Stützdaten vorab festgelegt.

Beispielsweise können die Teilzeiträume Δt₁, Δt₂, Δt₃ dann, wenn die meteorologischen Stützdaten darauf hindeuten, dass eine Anlagerung von Eis wahrscheinlich ist, mit vergleichsweise kurzer Länge festgelegt werden. Entsprechend können z. B. die Teilzeiträume Δt₁, Δt₂, Δt₃ dann, wenn die meteorologischen Stützdaten darauf hindeuten, dass eine Anlagerung von Eis weniger wahrscheinlich ist, mit vergleichsweise großer Länge festgelegt werden.

Beispielsweise können die Teilzeiträume Δt₁, Δt₂, Δt₃ alternativ oder zusätzlich auch bei einer Windkraftanlage an einem Standort, an welchem eine Anlagerung von Eis wahrscheinlich ist, mit vergleichsweise kurzer Länge festgelegt werden. Entsprechend können z. B. die Teilzeiträume Δt₁, Δt₂, Δt₃ bei einer Windkraftanlage an einem Standort, an welchem eine Anlagerung von Eis weniger wahrscheinlich ist, mit vergleichsweise großer Länge festgelegt werden.

Bei Ausführungsformen können die Längen der jeweiligen Teilzeiträume Δt₁, Δt₂, Δt₃ im Betrieb der Windkraftanlage in Abhängigkeit von einer Betriebsgröße der Windkraftanlage angepasst werden. Die Längen können z. B. in Abhängigkeit von der Rotorblattgeschwindigkeit der Rotorblätter der Windkraftanlage und/oder abhängig von meteorologischen Stützdaten angepasst werden.

Beispielsweise können die Teilzeiträume Δt₁, Δt₂, Δt₃ dann, wenn die meteorologischen Stützdaten darauf hindeuten, dass eine Anlagerung von Eis wahrscheinlich ist, in ihrer Länge verkürzt werden. Entsprechend können z. B. die Teilzeiträume Δt₁, Δt₂, Δt₃ dann, wenn die meteorologischen Stützdaten darauf hindeuten, dass eine Anlagerung von Eis weniger wahrscheinlich ist, in ihrer Länge erweitert werden.

Beispielsweise können die Teilzeiträume Δt₁, Δt₂, Δt₃ alternativ oder zusätzlich auch bei zunehmender Rotorblattgeschwindigkeit in ihrer Länge verkürzt werden. Eine zunehmende Rotorblattgeschwindigkeit kann eine Anlagerung von Eis begünstigen. Entsprechend können z. B. die Teilzeiträume Δt₁, Δt₂, Δt₃ bei abnehmender Rotorblattgeschwindigkeit in ihrer Länge verkürzt werden. Eine abnehmende Rotorblattgeschwindigkeit kann eine Anlagerung von Eis weniger wahrscheinlich machen.

Bei einer Ausführungsform wird das hierin beschriebene Verfahren zum Ermitteln der für einen Abtauvorgang benötigten Betriebsparameter einer Rotorblatt-Abtaueinrichtung verwendet. Beispielsweise kann der Zeitpunkt der Inbetriebnahme einer solchen Rotorblatt-Abtaueinrichtung anhand des Prognoseergebnisses und/oder anhand des Zeitpunkts tso der voraussichtlichen Überschreitung des oberen Schwellenwerts So für ein zufriedenstellendes Abtauergebnis bei niedrigem Energieaufwand bestimmt werden. Beispielsweise kann auch der Zeitpunkt der Außerbetriebnahme einer solchen Rotorblatt-Abtaueinrichtung anhand des Prognoseergebnisses und/oder anhand des Zeitpunkts tsu der voraussichtlichen Unterschreitung des unteren Schwellenwerts Su für ein zufriedenstellendes Abtauergebnis bei niedrigem Energieaufwand bestimmt werden.

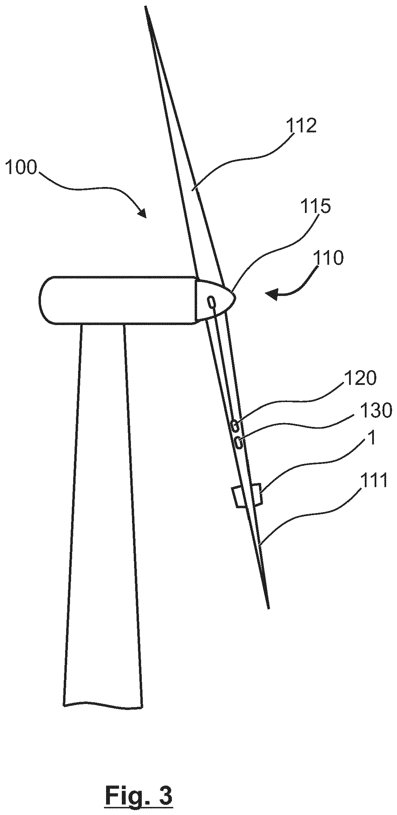

Fig. 3 zeigt beispielhaft eine Windkraftanlage 100, an welcher das hierin beschrieben Verfahren zum Einsatz kommen kann. Die Windkraftanlage umfasst einen Rotor 115, an dessen Rotornabe 110 drei Rotorblätter angebracht sind, von welchen in der Seitenansicht von Fig. 3 ein erstes Rotorblatt 111 und ein zweites Rotorblatt 112 gezeigt sind. Zur besseren Darstellung sind die nachfolgend beschriebenen Betriebsmittel nur an dem ersten Rotorblatt 111 dargestellt; sie können jedoch auch an weiteren oder an allen Rotorblättern vorhanden sein.

Im Bereich der Rotorblattspitze ist ein Eisansatz 1 schematisch dargestellt. Die Vibrationen im Rotorblatt werden mittels eines Rotorblattsensors 120 erfasst, der gemäß der Ausführungsform als Vibrationssensor ausgestaltet ist. Ferner ist eine Rotorblatt-Abtaueinrichtung 130 vorgesehen. Die Rotorblatt-Abtaueinrichtung 130 kann sich über weite Teile des jeweiligen Rotorblatts 111, 112 oder im Wesentlichen über dessen gesamte Ausdehnung erstrecken.

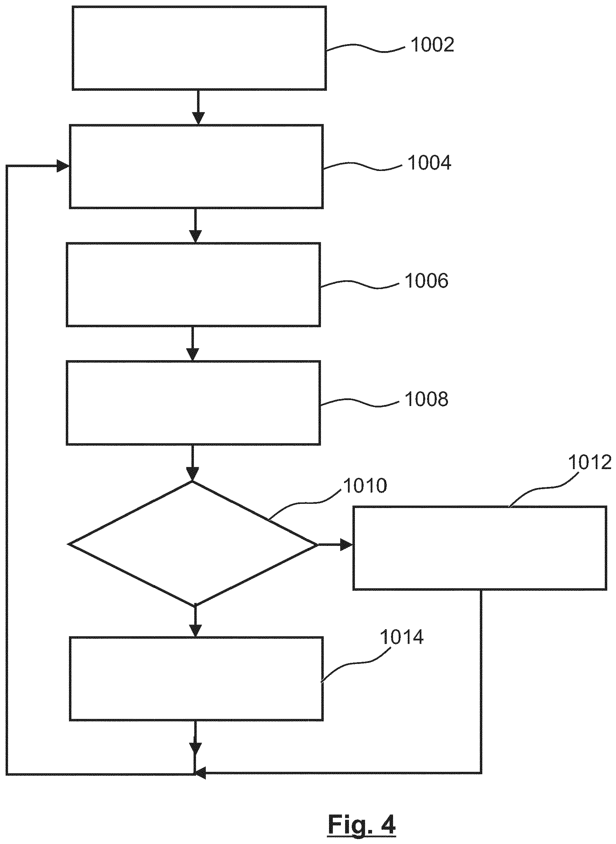

Fig. 4 zeigt ein Ablaufdiagramm eines Verfahrens zum Prognostizieren der Anlagerung von Eis an einem Rotorblatt 111, 112 der Windkraftanlage 100.

In einem Schritt 1002 des Verfahrens wird ein oberer Schwellenwert So und/oder ein unterer Schwellenwert Su für eine Systemgröße S festgelegt. Die Systemgröße S hängt mit der Masse des Rotorblatts 111, 112 und/oder mit der Masse eines Eisansatzes 1 der Rotorblatts 111, 112 zusammen.

In einem Schritt 1004 des Verfahrens werden Systemgrößendaten während eines Erfassungszeitraums T erfasst.

In einem Schritt 1006 des Verfahrens wird eine Ausgleichsrechnung des Kurvenverlaufs für einen Vorhersagezeitraum Δt₁', Δt₂', Δt₃' aus den Systemgrößendaten, die während eines Teilzeitraums Δt₁, Δt₂, Δt₃ des Erfassungszeitraums T erfasst wurden, zum Erhalten einer Vorhersagekurve N1, N2, N3 durchgeführt.

In einem Schritt 1008 des Verfahrens wird eine Ausgleichsrechnung des Kurvenverlaufs für einen weiteren Vorhersagezeitraum Δt₁', Δt₂', Δt₃' aus den Systemgrößendaten, die während eines weiteren Teilzeitraums Δt₁, Δt₂, Δt₃ des Erfassungszeitraums T erfasst wurden, zum Erhalten einer weiteren Vorhersagekurve N1, N2, N3 durchgeführt.

In einem Schritt 1010 des Verfahrens wird festgestellt, ob oder ob nicht der obere Schwellenwert So von einer oder mehreren der Vorhersagekurven N1, N2, N3 in der Zukunft überschritten wird und/oder ob nicht der untere Schwellenwert Su von einer oder mehreren der Vorhersagekurven N1, N2, N3 in der Zukunft unterschritten wird.

Wenn ermittelt wird, dass der obere Schwellenwert So von einer oder mehreren der Vorhersagekurven N1, N2, N3 in der Zukunft überschritten wird bzw. dass der untere Schwellenwert Su von einer oder mehreren der Vorhersagekurven N1, N2, N3 in der Zukunft unterschritten wird, dann wird mit Schritt 1012 fortgefahren. Wenn ermittelt wird, dass der obere Schwellenwert So von einer oder mehreren der Vorhersagekurven N1, N2, N3 in der Zukunft nicht überschritten wird bzw. dass der untere Schwellenwert Su von einer oder mehreren der Vorhersagekurven N1, N2, N3 in der Zukunft nicht unterschritten wird, wird mit Schritt 1014 fortgefahren.

In Schritt 1012 wird als Ergebnis der Feststellung ausgegeben, dass der obere Schwellenwert So von einer oder mehreren der Vorhersagekurven N1, N2, N3 in der Zukunft überschritten wird bzw. dass der untere Schwellenwert Su von einer oder mehreren der Vorhersagekurven N1, N2, N3 in der Zukunft unterschritten wird.

In Schritt 1014 wird als Ergebnis der Feststellung ausgegeben, dass der obere Schwellenwert So von einer oder mehreren der Vorhersagekurven N1, N2, N3 in der Zukunft nicht überschritten wird bzw. dass der untere Schwellenwert Su von einer oder mehreren der Vorhersagekurven N1, N2, N3 in der Zukunft nicht unterschritten wird.

Nach Schritt 1012 bzw. nach Schritt 1014 erfolgt ein Rücksprung zu Schritt 1004.

Es sei an dieser Stelle darauf hingewiesen, dass die hierin beschriebenen Aspekte und Ausführungsformen angemessen miteinander kombinierbar sind. Abwandlungen und Ergänzungen der hierin beschriebenen Aspekte sind dem Fachmann geläufig.

## Patentansprüche

1. Verfahren zum Prognostizieren der Anlagerung von Eis an einem Rotorblatt (111, 112) einer Windkraftanlage (100), umfassend:
Festlegen eines oberen Schwellenwertes (So) und/oder eines unteren Schwellenwerts (Su) für eine Systemgröße (S), die mit der Masse des Rotorblatts (111, 112) und/oder mit der Masse eines Eisansatzes (1) des Rotorblatts (111, 112) zusammenhängt;
Erfassen von Systemgrößendaten während eines Erfassungszeitraums (T) zum Erhalten eines Kurvenverlaufs (10) der Systemgröße (S) während des Erfassungszeitraums (T);
Durchführen einer Ausgleichsrechnung des Kurvenverlaufs für einen Vorhersagezeitraum (Δt₁', Δt₂', Δt₃') aus den Systemgrößendaten, die während eines Teilzeitraums (Δt₁, Δt₂, Δt₃) des Erfassungszeitraums (T) erfasst wurden, zum Erhalten einer Vorhersagekurve (N1, N2, N3);
Durchführen mindestens einer weiteren Ausgleichsrechnung des Kurvenverlaufs für einen weiteren Vorhersagezeitraum (Δt₁', Δt₂', Δt₃') aus den Systemgrößendaten, die während eines anderen Teilzeitraums (Δt₁, Δt₂, Δt₃) des Erfassungszeitraums (T) erfasst wurden, zum Erhalten einer weiteren Vorhersagekurve (N1, N2, N3);
Feststellen, ob oder ob nicht der obere Schwellenwert (So) von einer oder mehreren der Vorhersagekurven (N1, N2, N3) in der Zukunft überschritten wird und/oder ob nicht der untere Schwellenwert (Su) von einer oder mehreren der Vorhersagekurven (N1, N2, N3) in der Zukunft unterschritten wird;
Ausgeben des Ergebnisses der Feststellung
wobei, wenn festgestellt wird, dass der obere Schwellenwert (So) von einer oder mehreren der Vorhersagekurven (N1, N2, N3) in der Zukunft überschritten wird, eine Eiswarnmeldung ausgegeben wird; und
wobei, wenn festgestellt wird, dass der untere Schwellenwert (Su) von einer oder mehreren der Vorhersagekurven (N1, N2, N3) in der Zukunft unterschritten wird, eine Eisfreimeldung ausgegeben wird.

2. Verfahren nach Anspruch 1, wobei die Systemgröße (S) zu der Gesamtmasse des Rotorblatts (111, 112) und/oder zu einem zusätzlichen Massenbelag des Rotorblatts (111, 112) proportional ist.

3. Verfahren nach einem der vorhergehenden Ansprüche, ferner umfassend:
Ermitteln und Ausgeben eines voraussichtlichen Überschreitungszeitpunkts (tso), zu welchem eine Mindestmenge an Eis an dem Rotorblatt (111, 112) überschritten werden wird, und/oder Ermitteln und Ausgeben eines voraussichtlichen Unterschreitungszeitpunkts (tsu), zu welchem eine Maximalmenge an Eis an dem Rotorblatt (111, 112) unterschritten werden wird.

4. Verfahren nach einem der vorhergehenden Ansprüche, wobei das Erfassen von Systemgrößendaten umfasst:
Messen einer Messgröße im Zeitverlauf des Erfassungszeitraums (T), vorzugsweise Messen von Vibrationen im Zeitverlauf des Erfassungszeitraums, an oder in dem Rotorblatt (111, 112);
Herleiten der Systemgröße (S), vorzugsweise durch Eigenfrequenzanalyse, aus den Messdaten.

5. Verfahren nach einem der vorhergehenden Ansprüche, wobei jede der Ausgleichsrechnungen jeweils für einen Vorhersagezeitraum (Δt₁', Δt₂', Δt₃') in der Zukunft durchgeführt wird, welcher maximal so lang ist, vorzugsweise ungefähr gleich lang ist, wie der für die jeweilige Ausgleichsrechnung herangezogene Teilzeitraum (Δt₁, Δt₂, Δt₃) von erfassten Systemgrößendaten.

6. Verfahren nach einem der vorhergehenden Ansprüche, ferner umfassend:
Herleiten einer Wahrscheinlichkeit dafür, ob oder ob nicht eine Mindestmenge an Eis an dem Rotorblatt (111, 112) angelagert wird, aus dem jeweiligen Vorhersagezeitraum ((Δt₁', Δt₂', Δt₃') und/oder aus dem jeweiligen Überschreitungszeitpunkt (tso) und/oder aus dem jeweiligen Kurvenverlauf der jeweiligen Vorhersagekurve (N1, N2, N3); und/oder
Herleiten einer Wahrscheinlichkeit dafür, ob oder ob nicht eine Maximalmenge an angelagertem Eis an dem Rotorblatt (111, 112,) unterschritten werden wird, aus dem jeweiligen Vorhersagezeitraum (Δt₁', Δt₂', Δt₃') und/oder aus dem jeweiligen Unterschreitungszeitpunkt (tsu) und/oder aus dem jeweiligen Kurvenverlauf der jeweiligen Vorhersagekurve (N1, N2, N3).

7. Verfahren nach einem der vorhergehenden Ansprüche, ferner umfassend:
Herleiten der Menge an Eis, das voraussichtlich an dem Rotorblatt (111, 112) angelagert wird, aus dem jeweiligen Vorhersagezeitraum (Δt₁', Δt₂', Δt₃') und/oder aus dem jeweiligen Überschreitungszeitpunkt (tso) und/oder aus dem jeweiligen Kurvenverlauf der jeweiligen Vorhersagekurve (N1, N2, N3).

8. Verfahren nach einem der vorhergehenden Ansprüche, wobei mindestens eine der Ausgleichsrechnungen, vorzugsweise alle Ausgleichsrechnungen, eine lineare oder eine quadratische Regression ist bzw. sind.

9. Verfahren nach einem der vorhergehenden Ansprüche, wobei mindestens einer der Teilzeiträume (Δt₁, Δt₂, Δt₃) eine Länge von ungefähr einer Stunde oder mehr hat, und wobei vorzugsweise mindestens drei Ausgleichsrechnungen durchgeführt werden, deren jeweiliger Teilzeitraum eine Länge von ca. 1 Stunde, ca. 2 Stunden bzw. ca. 4 Stunden hat.

10. Verfahren nach einem der vorhergehenden Ansprüche, wobei die Längen der jeweiligen Teilzeiträume (Δt₁, Δt₂, Δt₃) vorab festgelegt sind, vorzugsweise abhängig vom Standort der Windkraftanlage (100) und/oder abhängig von meteorologischen Stützdaten vorab festgelegt sind.

11. Verfahren nach einem der vorhergehenden Ansprüche,
wobei die Längen der jeweiligen Teilzeiträume (Δt₁, Δt₂, Δt₃) im Betrieb der Windkraftanlage (100) in Abhängigkeit von einer Betriebsgröße der Windkraftanlage (100) angepasst werden, vorzugsweise in Abhängigkeit von der Rotorblattgeschwindigkeit der Rotorblätter (111, 112) der Windkraftanlage (100) und/oder abhängig von meteorologischen Stützdaten angepasst werden.

12. Verwendung des Verfahrens nach einem der Ansprüche 1-11 zum Ermitteln der für einen Abtauvorgang benötigten Betriebsparameter einer Rotorblatt-Abtaueinrichtung (130).

## Claims

1. A method for predicting the accumulation of ice on a rotor blade (111, 112) of a wind turbine (100), comprising:
defining an upper threshold value (So) and/or a lower threshold value (Su) for a system variable (S) which is associated with the mass of the rotor blade (111, 112) and/or with the mass of an ice attachment (1) of the rotor blade (111, 112);
acquiring system variable data during an acquisition time period (T) for obtaining a curve (10) of the system variable (S) during the acquisition time period (T);
carrying out a compensation calculation of the curve profile for a prediction time period (Δt₁', Δt₂', Δt₃') from the system variable data which were acquired during a partial time period (Δt₁, Δt₂, Δt₃) of the acquisition time period (T) in order to obtain a prediction curve (N1, N2, N3);
carrying out at least one further compensation calculation of the curve profile for a further prediction time period (Δt₁', Δt₂', Δt₃') from the system variable data which were acquired during another partial time period (Δt₁, Δt₂, Δt₃) of the acquisition time period (T) in order to obtain a further prediction curve (N1, N2, N3);
determining whether or not the upper threshold value (So) will be exceeded by one or more of the prediction curves (N1, N2, N3) in the future and/or whether or not the lower threshold value (So) will be undershot by one or more of the prediction curves (N1, N2, N3) in the future; and
outputting the result of the determination,
wherein, if it is determined that the upper threshold value (So) will be exceeded by one or more of the prediction curves (N1, N2, N3) in the future, an ice warning message is output; and
wherein, if it is determined that the lower threshold value (Su) will be undershot by one or more of the prediction curves (N1, N2, N3) in the future, a free-of-ice message is output.

2. The method according to claim 1,
wherein the system variable (S) is proportional to the total mass of the rotor blade (111, 112) and/or to an additional deposit on the mass of the rotor blade (111, 112).

3. The method according to anyone of the preceding claims, further comprising:
determining and outputting a prospective exceeding point of time (tso) when a minimum amount of ice on the rotor blade (111, 112) will be exceeded and/or determining and outputting a prospective undershooting point of time (tsu) when a maximum amount of ice on the rotor blade (111, 112) will be undershot.

4. The method according to anyone of the preceding claims, wherein the acquiring of system variable data comprises:
measuring a measurand in the temporal course of the acquisition time period (T), preferably measuring vibrations in the temporal course of the acquisition time period (T) at or in the rotor blade (111, 112);
deducing the system variable (S), preferably by a natural frequency analysis, from the measurement data.

5. The method according to anyone of the preceding claims,
wherein each of the compensation calculations is respectively carried out for a prediction time period (Δt₁', Δt₂', Δt₃') in the future, which is at maximum as long, preferably of the same length, as the partial time period (Δt₁, Δt₂, Δt₃) of acquired system variable data used for the respective compensation calculation.

6. The method according to anyone of the preceding claims, further comprising:
deducing a probability, whether or not a minimum amount of ice will be accumulated on a rotor blade (111, 112) from the respective prediction time period (Δt₁', Δt₂', Δt₃') and/or from the respective exceeding point of time (tso) and/or from the respective curve profile of the respective prediction curve (N1, N2, N3); and/or
deducing a probability, whether or not a maximum amount of accumulated ice on a rotor blade (111, 112) will be undershot, from the respective prediction time period (Δt₁', Δt₂', Δt₃') and/or from the respective undershooting point of time (tsu) and/or from the respective curve profile of the respective prediction curve (N1, N2, N3).

7. The method according to anyone of the preceding claims, further comprising:
deducing the amount of ice which is expected to be accumulated on the rotor blade (111, 112), from the respective prediction time period (Δt₁', Δt₂', Δt₃') and/or from the respective exceeding point of time (tso) and/or from the respective curve profile of the respective prediction curve (N1, N2, N3).

8. The method according to anyone of the preceding claims,
wherein at least one of the compensation calculations, preferably all of the compensation calculations is or are a linear or a square regression.

9. The method according to anyone of the preceding claims,
wherein at least one of the partial time periods (Δt₁, Δt₂, Δt₃) has a length of approximately one hour or more, and wherein preferably at least three compensation calculations are carried out, and the respective partial time periods thereof have a length of about 1 hour, about 2 hours or about 4 hours.

10. The method according to anyone of the preceding claims,
wherein the lengths of the respective partial time periods (Δt₁, Δt₂, Δt₃) are defined in advance, preferably are defined in advance as a function of the location of the wind turbine (100) and/or as a function of meteorological supporting data.

11. The method according to anyone of the preceding claims,
wherein the lengths of the respective partial time periods (Δt₁, Δt₂, Δt₃) are adjusted during the operation of the wind turbine (100) as a function of the plant size of the wind turbine (100), preferably as a function of the rotor blade speed of the rotor blades (111, 112) of the wind turbine (100) and/or as a function of meteorological supporting data.

12. Use of the method according to anyone of claims 1 to 11 for determining the operating parameters of a rotor blade de-icing device (130) which are required for a de-icing process.

## Revendications

1. Procédé permettant de pronostiquer une accumulation de givre sur une pale de rotor (111, 112) d'une éolienne (100), comprenant :
la définition d'une valeur seuil supérieure (So) et/ou d'une valeur seuil inférieure (Su) pour une grandeur de système (S) qui est liée à la masse de la pale de rotor (111, 112) et/ou à la masse d'une formation de givre (1) sur la pale de rotor (111, 112) ;
la saisie de données de grandeur de système pendant une période de saisie (T) pour obtenir une allure de courbe (10) de la grandeur de système (S) pendant la période de saisie (T) ;
l'exécution d'un calcul de compensation de l'allure de courbe pour une période de prédiction (Δt₁', Δt₂', Δt₃') à partir des données de grandeur de système qui ont été saisies pendant une période partielle (Δt₁, Δt₂, Δt₃) de la période de saisie (T) pour obtenir une courbe de prédiction (N1, N2, N3) ;
l'exécution d'au moins un calcul de compensation supplémentaire de l'allure de courbe pour une période de prédiction supplémentaire (Δt₁', Δt₂', Δt₃') à partir des données de grandeur de système qui ont été saisies pendant une autre période partielle (Δt₁, Δt₂, Δt₃) de la période de saisie (T) pour obtenir une courbe de prédiction supplémentaire (N1, N2, N3) ;
le fait de constater si la valeur seuil supérieure (So) sera dépassée ou non par une ou plusieurs des courbes de prédiction (N1, N2, N3) dans l'avenir et/ou si la valeur seuil inférieure (Su) sera dépassée vers le bas ou non par une ou plusieurs des courbes de prédiction (N1, N2, N3) dans l'avenir ;
l'émission du résultat de la constatation ;
sachant que, lorsqu'il est constaté que la valeur seuil supérieure (So) sera dépassée par une ou plusieurs des courbes de prédiction (N1, N2, N3) dans l'avenir, un message d'alerte de givre est émis ; et
sachant que, lorsqu'il est constaté que la valeur seuil inférieure (Su) sera dépassée vers le bas par une ou plusieurs des courbes de prédiction (N1, N2, N3) dans l'avenir, un message d'absence de givre est émis.

2. Procédé selon la revendication 1,
sachant que la grandeur de système (S) est proportionnelle à la masse totale de la pale de rotor (111, 112) et/ou à un revêtement massique supplémentaire de la pale de rotor (111, 112).

3. Procédé selon l'une des revendications précédentes, comprenant en outre :
la détermination et l'émission d'un moment de dépassement probable (tso) lors duquel une quantité minimale de givre sur la pale de rotor (111, 112) sera dépassée, et/ou la détermination et l'émission d'un moment de dépassement probable vers le bas (tsu) lors duquel une quantité maximale de givre sur la pale de rotor (111, 112) sera dépassée vers le bas.

4. Procédé selon l'une des revendications précédentes, sachant que la saisie de données de grandeur de système comprend :
la mesure d'une grandeur de mesure dans l'allure temporelle de la période de saisie (T), de préférence la mesure de vibrations dans l'allure temporelle de la période de saisie, sur ou dans la pale de rotor (111, 112) ;
la déduction de la grandeur de système (S), de préférence par analyse des fréquences propres, à partir des données de mesure.

5. Procédé selon l'une des revendications précédentes, sachant que chacun des calculs de compensation est effectué respectivement pour une période de prédiction (Δt₁', Δt₂', Δt₃') dans l'avenir, laquelle est au maximum aussi longue, de préférence approximativement de même longueur, que la période partielle (Δt₁, Δt₂, Δt₃) adoptée pour le calcul de compensation respectif de données de grandeur de système saisies.

6. Procédé selon l'une des revendications précédentes, comprenant en outre :
la déduction d'une probabilité pour le fait de savoir si une quantité minimale de givre s'est accumulée ou non sur la pale de rotor (111, 112) à partir de la période de prédiction (Δt₁', Δt₂', Δt₃') respective et/ou à partir du moment de dépassement (tso) respectif et/ou à partir de l'allure de courbe respective de la courbe de prédiction (N1, N2, N3) respective ; et/ou
la déduction d'une probabilité pour le fait de savoir si une quantité maximale de givre accumulée sur la pale de rotor (111, 112) sera dépassée vers le bas ou non à partir de la période de prédiction (Δt₁', Δt₂', Δt₃') respective et/ou à partir du moment de dépassement vers le bas (tsu) respectif et/ou à partir de l'allure de courbe respective de la courbe de prédiction (N1, N2, N3) respective.

7. Procédé selon l'une des revendications précédentes, comprenant en outre :
la déduction de la quantité de givre qui s'est probablement accumulée sur la pale de rotor (111, 112) à partir de la période de prédiction (Δt₁', Δt₂', Δt₃') respective et/ou à partir du moment de dépassement (tso) respectif et/ou à partir de l'allure de courbe respective de la courbe de prédiction (N1, N2, N3) respective.

8. Procédé selon l'une des revendications précédentes, sachant qu'au moins un des calculs de compensation, de préférence tous les calculs de compensation, est ou sont une régression linéaire ou carrée.

9. Procédé selon l'une des revendications précédentes, sachant qu'au moins une des périodes partielles (Δt₁, Δt₂, Δt₃) a une longueur d'approximativement une heure ou plus, et sachant que de préférence au moins trois calculs de compensation sont effectués dont la période partielle respective a une longueur d'env. 1 heure, d'env. 2 heures et d'env. 4 heures respectivement.

10. Procédé selon l'une des revendications précédentes, sachant que les longueurs des périodes partielles respectives (Δt₁, Δt₂, Δt₃) sont définies préalablement, et sont de préférence définies préalablement en fonction du site de l'éolienne (100) et/ou en fonction de données d'appui météorologiques.

11. Procédé selon l'une des revendications précédentes, sachant que les longueurs des périodes partielles respectives (Δt₁, Δt₂, Δt₃) sont adaptées en fonctionnement de l'éolienne (100) en fonction d'une grandeur de fonctionnement de l'éolienne (100), et sont de préférence adaptées en fonction de la vitesse de pale de rotor des pales de rotor (111, 112) de l'éolienne (100) et/ou en fonction de données d'appui météorologiques.

12. Utilisation du procédé selon l'une des revendications 1 à 11 pour déterminer les paramètres de fonctionnement d'un dispositif de dégivrage de pale de rotor qui sont nécessaires pour une opération de dégivrage (130).
